# EUROPEAN PATENT SPECIFICATION

(11) **EP 0 984 883 B1**
(45) Date of publication and mention of the grant of the patent: **07.01.2004**
(21) Application number: 98928647.1
(22) Date of filing: 03.06.1998
(51) Int. Cl.: B62B 3/06

(54) **ASSEMBLY FOR TRANSPORTING PALLETS, CONTAINERS AND THE LIKE, AND THE USE OF SUCH AN ASSEMBLY**
VORRICHTUNG ZUM TRANSPORTIEREN VON PALETTEN, BEHÄLTERN O.D. UND DIE ANWENDUNG SOLCHER VORRICHTUNG
ENSEMBLE SERVANT A TRANSPORTER DES PALETTES, DES CONTENEURS OU DES ARTICLES SEMBLABLES ET UTILISATION DE CET ENSEMBLE

(30) Priority: 03.06.1997 NL 1006215
(43) Date of publication of application: 15.03.2000
(73) Proprietor: Harmelerwaard Patents B.V., 3481 LC Harmelen (NL)
(72) Inventor: VAN VUUREN, Johannes, NL-3481 LC Harmelen (NL)
(74) Representative: Duxbury, Stephen
(86) International application number: PCT/NL1998/000324
(87) International publication number: WO 1998/055351

(56) References cited:
- CH-A- 447 938
- FR-A- 2 190 083

## Description

From the Swiss patent publication CH 447 938, an assembly for transporting pallets, containers and the like, said assembly comprising:
- a frame part,
- support means which extend forwardly from said frame part for supporting pallets or the like thereon, wherein said support means are displaceable between a loading position and a transporting position, and,
- securing means, associated with the support means,
- one or more wheels having a diameter greater than the thickness of the support means, which wheel(s) can be secured to the support means after elevating the support means to a transport position in which the transport means are at least elevated to a height of half the diameter of said wheels, is known.

In order to improve such an assembly the invention provides an assembly for transporting pallets, containers and the like, said assembly comprising:
- a frame part,
- support means which extend forwardly from said frame part for supporting pallets or the like thereon, wherein said support means are displaceable between a loading position and a transporting position, and,
- securing means, associated with the support means,
- one or more wheels having a diameter greater than the thickness of the support means, which wheel(s) are secured to the support means thereby, wherein said wheels are displaceable, when secured to the support means, between a stowed away, non-use position, and a use position, in which use position the assembly is displaceable via said wheels.

An assembly according to the invention has the advantage that the wheels having a diameter greater than the thickness of the support means are displaceable between a stowed away, non-use position and a use position and therefore allow for mounting the wheels in every position of the support means, e.g. allowing the wheels to be mounted when the support means are directly supported by the ground.

The supports can, for example, be easily inserted through the openings of a pallet during loading of the assembly, whereafter the wheels can be secured to the supports in order to raise these further off the ground to provide greater user flexibility in this transporting position.

The assembly provided with a wheel arranged at the front end of the fork-like support elements, which wheel is preferably releasably securable thereto and which preferably has a substantially greater diameter than the thickness of the support element, enables the user to simply manoeuvre the assembly, and accordingly to steer and manage on varying surfaces, especially on soft ground such as muddy or grassy areas, which is particularly advantageous with respect to known pallet wagons when for example transporting pallets on a farm.

In use, the user simply inserts the forks through the pallet openings, whereafter the fork wheels are secured thereto and the forks are subsequently raised.

The fork wheel can be mounted on fork-like support means by a mounting element wherein the mounting element is most preferably rotatably arranged on the fork-like support means.

Accordingly, instead of releasing the fork wheel in order to insert the fork-like support means through the pallet openings, the mounting element and hence the fork wheel, need only to be rotated, in which position the fork-like support element can be inserted through the pallet opening without necessitating release of the fork wheel.

The fork-like support is preferably provided with a roller mounted in the front end thereof, wherein this roller preferably has a diameter roughly the same as the thickness of the fork-like support. The fork-like support can accordingly be inserted through the openings of a pallet, whereby a good user flexibility is provided for the assembly, for example when said assembly is utilized in large warehouses.

The diameter of the wheel is preferably roughly the same as or greater than the upwards and downwards displaceability of the fork-like support, in order to provide a good working flexibility.

The claims refer to further preferred characteristics of the present invention.

According to a second aspect of the present invention there is provided a wheel construction according to claim 20, which is coupleably securable to a pallet wagon.

According to a further aspect of the present invention there is provided the use of the assembly for transporting pallets and the like.

The invention will now be further clarified with respect to the following description, which refers to the figures, wherein:
figure 1 shows a perspective, partially broken away view of the assembly according to the present invention;
figure 2 shows a partially cut away perspective view of a releasable, securable wheel assembly according to the present invention;
figures 3a-c show a side view of the upwards and downwards displaceability of the fork elements of the assembly from figures 1 and 2;
figures 4a-4d and 5a-5d show second and third embodiments of a releasable, securable wheel assembly according to the present invention;
figures 6a-6c and figures 7a and 7b show fourth and fifth embodiments of a releasable securable wheel assembly according to the present invention;
figures 8a and 8b show a sixth embodiment of a wheel assembly according to the present invention;
figures 9a, b and c show a seventh embodiment of the assembly according to the present invention;
figure 10a and b show an eighth embodiment of the assembly according to the present invention;
figure 11a, b and c show a perspective view of the front end of the fork for a ninth embodiment of the assembly according to the present invention;
figure 12 shows a perspective view of a tenth embodiment of the present invention; and
figure 13 shows a perspective view of an eleventh embodiment of the present invention.

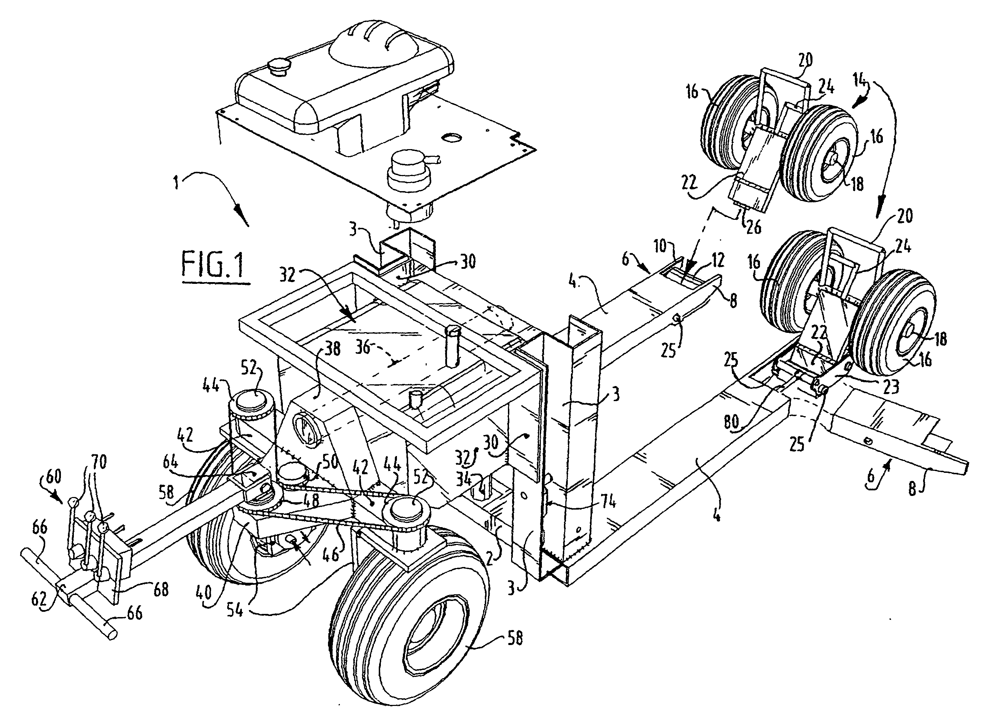

An assembly 1 according to the present invention (figure 1) comprises a displaceable frame part 2 which extends between two upstanding displaceable carriers 3 and two forks 4, which extend forwardly on the carriers 3.

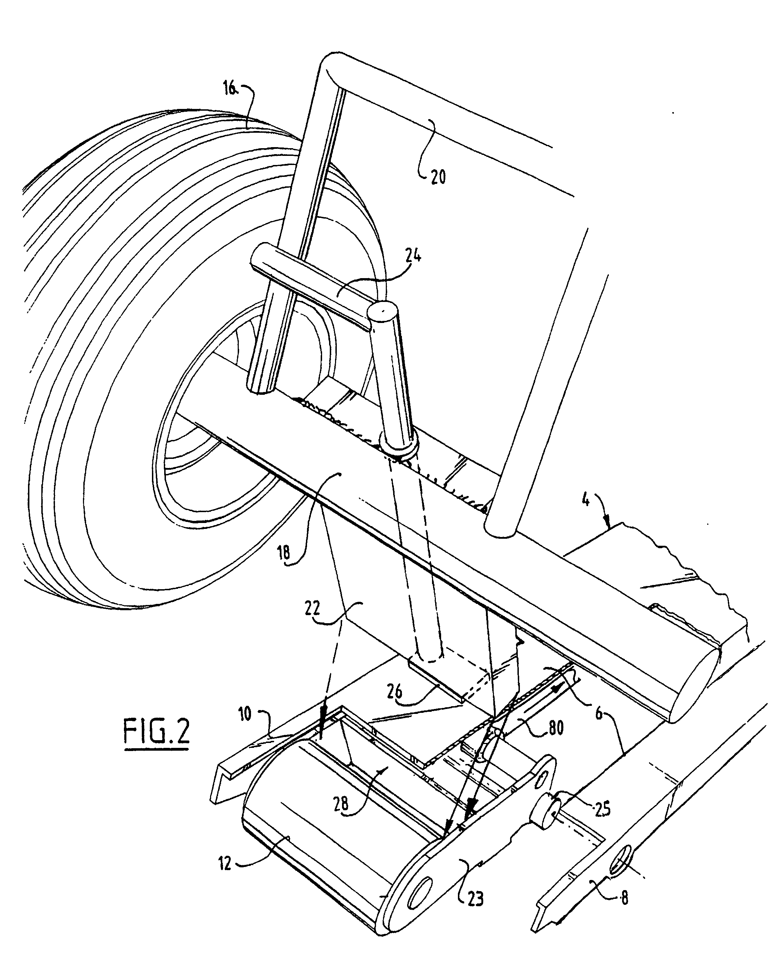

Each fork 4 has a front end 6, having two oppositely arranged wing parts 8, 10 wherebetween a rotatable roll 12 is mounted (see also figure 2).

A releasable wheel construction 14 is coupleably securable to the front end 8 of the forks 4 (see further below). Each wheel construction 14 has two wheels 16 which are mounted on an axle 18.

A hand grip 20 is also mounted on the axle 18.

A stabilizing plate 22 is also mounted on this axle 18.

A rotatable handle 24 extends downwardly from this plate 22 and terminates in a locking part 26 which is also rotatable (see figure 2).

The rollers 12 (see also figure 2), are rotatably mounted in a fork part 23 which in turn by means of a rotatable pin 25 are hingeably mounted between the wings 8, 10 and forks 4.

A locking board 28 extends between side walls of the frame part 54.

The wheel construction 14 is secured to the forks 4 by mounting the stabilizing plate 22 in the area between the rotatable roll 12 and the locking board 28. Subsequently the handle 24 is manually rotated so that the locking part 26 is locked behind the locking board 28, whereby the wheel construction is coupled to the forks 4.

The upwards and downwards displaceability of the carrier 3 is stabilized by means of secure stabilizing plates 30 which are connected with a housing 32 for motor, which housing 32 is mounted between the frame part 2, the carriers 3, and the rear chassis part 40.

A hydraulic cylinder 34 is mounted in front of the motor housing 32 between the frame part 2 and the housing 32, which cylinder 34 effects the relative movement between the plates 30 and the carrier 3. A rod 36 extending longitudinally through the motor housing 32 connects an upstanding rear part 38 of the rear chassis part 42 the assembly. The motor, not shown, provides the cylinder 34 with driving energy.

This chassis part 40 is provided with two laterally extending arms 42.

Two cogwheels 44 are mounted on the arm 42 of the chassis part 40, where between a chain 46 is tensioned with the aid of a central cog 48 and a help cog 50.

The arm cogs 44 are mounted on rotatable pins 52 which extend through the arms 42. The pins 52 are secured in wheel cases 54.

Each wheel case 54 is provided with a wheel axle whereon rear wheels 58 are mounted.

A steering mechanism 60 is connected to the rear wheels 58 by means of a steering column 62 mounted on a control pin 64 arranged on the central cog 48. A steering rod 66 is also mounted on the steering column 62.

Furthermore a control panel 68 is mounted on the steering column 62, whereon control knobs 70 are arranged.

The assembly 1 can be simply controlled by means of displacing the steering column to the left or the right, whereby the rear wheels are in turn, by means of rotation of the cogs are inclined over the left or the right.

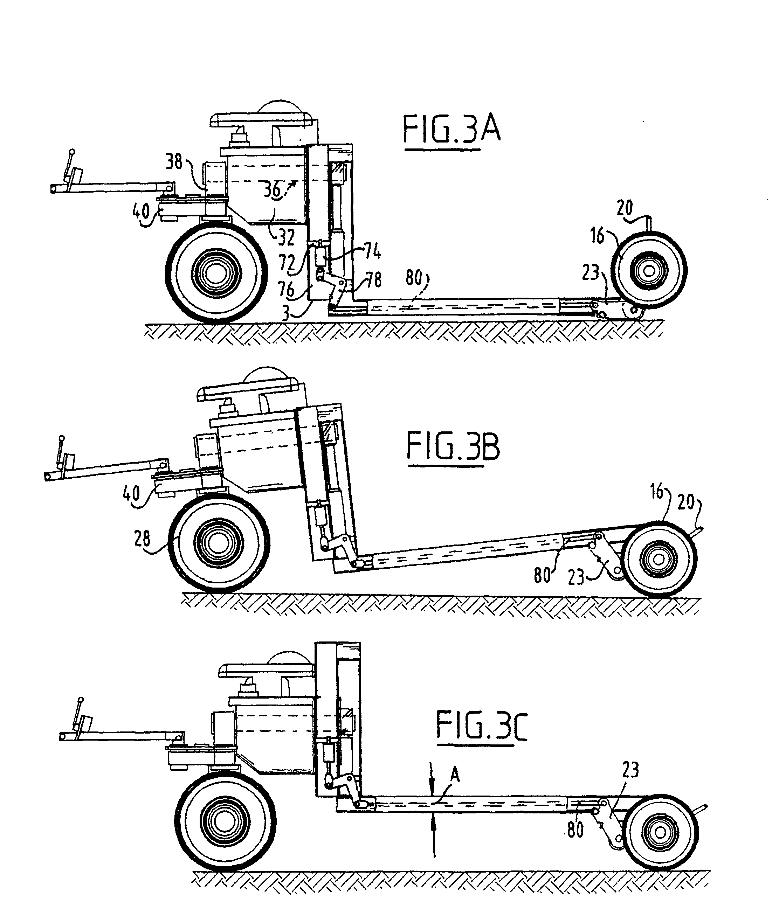

Two side cylinders 74 are arranged in side channels 76 of the carriers 3 by means of mounting pins 72 (figure 3). Each pin 72 is also joined with a leg part 78 which extends between the side cylinders 74 and movable rods 80 which are arranged in each fork 4, of which only one is shown, and extend from these legs 78 to the hingeable fork part 54 of the forks 4.

After arranging a wheel construction 14 in the hingeable fork part 23 as described above (see figure 3a), the user effects the upwards and downwards displacement of the forks 4 as follows:

By means of operating the control knobs, drive energy is transmitted to the cylinder 34 whereby this is pushed in. On so doing, the frame part 2, carriers 3 and the forks 4 are raised, whereby subsequently, the independent side cylinders 74 are pushed out and whereby the rods 80 are pushed in the direction of the wheel constructions 14.

In this manner, the hingeable fork part 23 is rotated downwards about the pin 25 whereby the wheel assembly 14 is in turn pulled upwards (see figure 3b).

On pushing in the raised cylinder 34, the frame part 2 and the side cylinder 74 are pushed in whereby the carriers 3 are stabilized and guided by the secure guiding elements 30.

On complete compression of this cylinder 34 (see figure 3c), said cylinder 34 is locked in this position. In this position, each wheel construction 14 has assumed its transport position. It will be clear that the forks may be pushed through the openings on pallets; before the wheel constructions are arranged in a position.

In this position (see figure 3c), the forks are displaced at a distance of roughly 36 cm above the ground, which distance is roughly equal to the diameter of the wheels of the wheel assembly.

The forks have a diameter A which is roughly equal to the diameter of the rollers 12, these having a diameter of about 8 cm.

In order to return the forks 4 to their lowered position (see figure 3a), the above described steps are reversed.

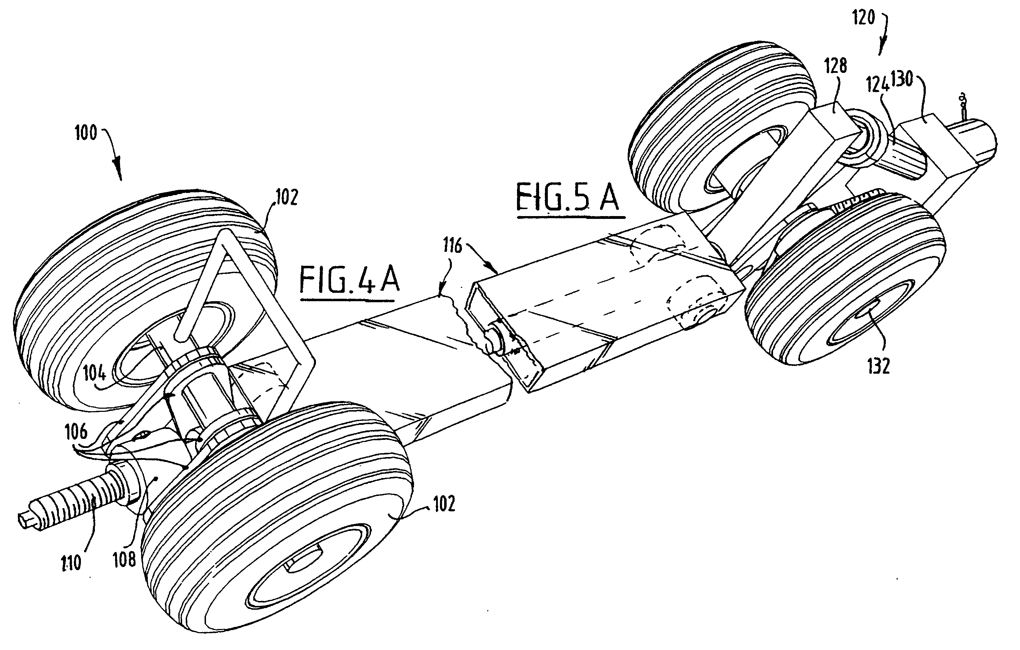

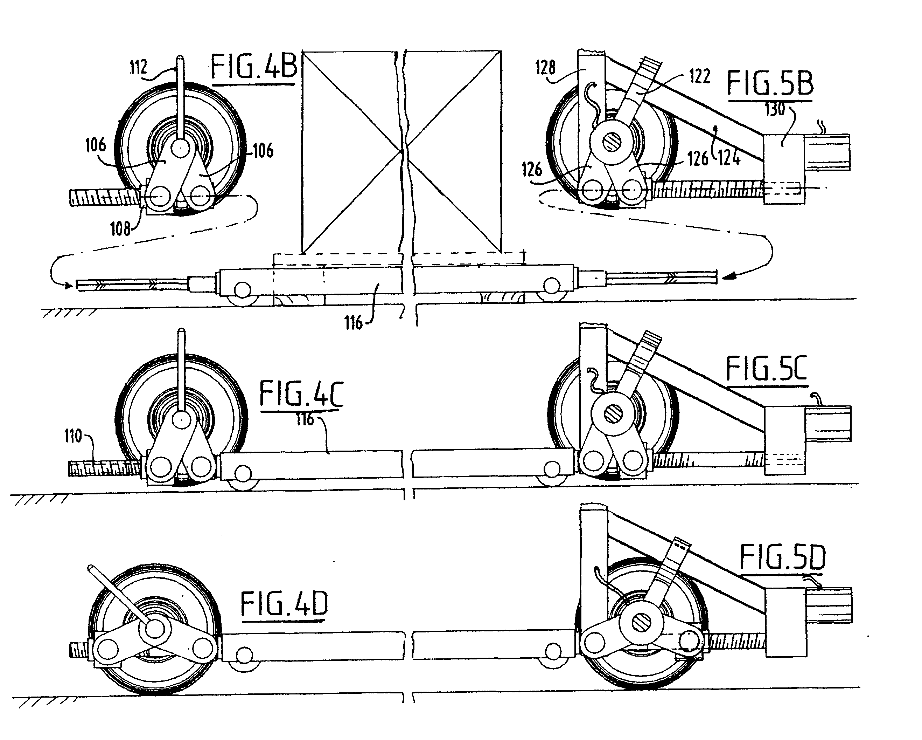

A second embodiment 100 of the wheel construction according to the present invention is shown in figure 4a-4d.

This wheel construction 100 has two wheels 104 arranged on an axle 102. Four hingeable trellis elements 106 are also arranged on the axle 102 which extend downwardly from the axle 102. The other terminal end of this trellis elements 102 is joined with oppositely arranged sides of ring carriers 108 (of which only one is showing).

This wheel construction 100 is arranged on the front end of a pallet wagon 4 as follows:

Firstly a support rod 110 is arranged in the front end of the pallet fork and secured in place (see figure 4b).

Subsequently, the ring carriers 108 of the trellis elements are arranged over this support rod 110. A handgrip 112 is subsequently pushed downwards, whereby the trellis elements 106 are forced apart around the axle 104 whereby the support rod 110 and accordingly the pallet fork 116 are upwardly displaced (see figure 4d).

A third embodiment 120 of the wheel construction according to the present invention works according to the same principal as the second embodiment 100, but instead of a handgrip 112 a stabilizing element 122 is displaceable along a stabilizing rod 124 herewith, which rod 124 is arranged between an upstanding column connected to the trellis element 126 and a second stabilizing block fork element 130. These trellis elements 126 can be automatically rotated around an axle 132.

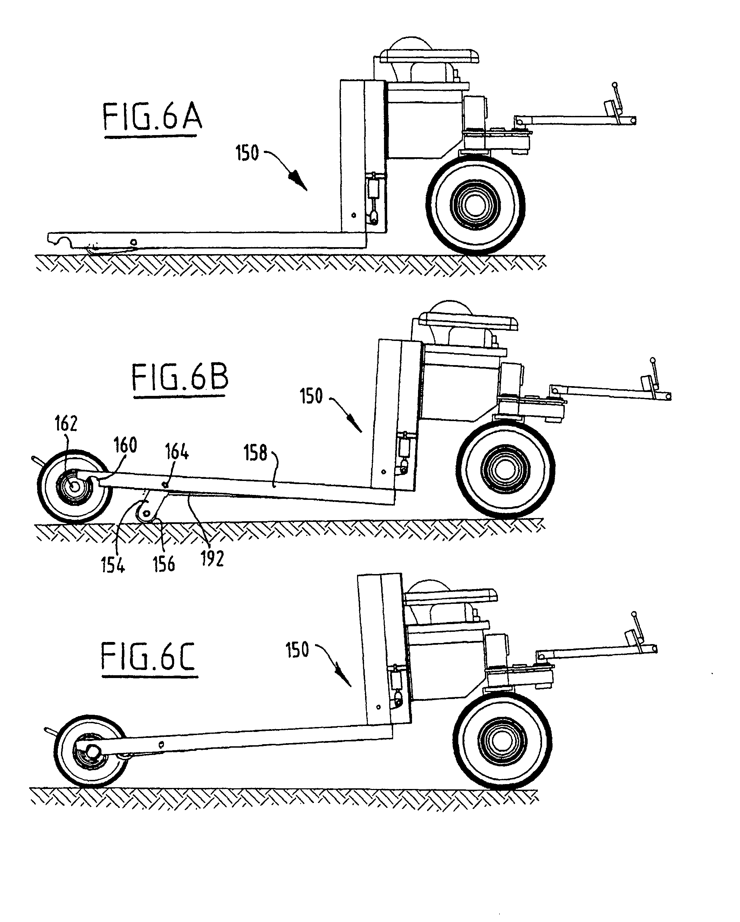

A fourth embodiment of the present invention is shown in figure 6a-6c. In this embodiment 150, just as in the embodiment shown in figure 3a-3c, a hydraulically driven displaceable rod 152 connected with a hingeable fork part 154 wherein a roller 156 is mounted. Near the front end of the forks 158 there is however arranged a hook-like profile 160 which fits over an outstanding hub 162 of the releasable wheel assembly (see figures 6b and 6c), whereby in figure 6c the hingeable fork part 154 is rotated back around a pin 164 by means of the rod 152 so that this fork part 154 along/under the fork 159 is positioned.

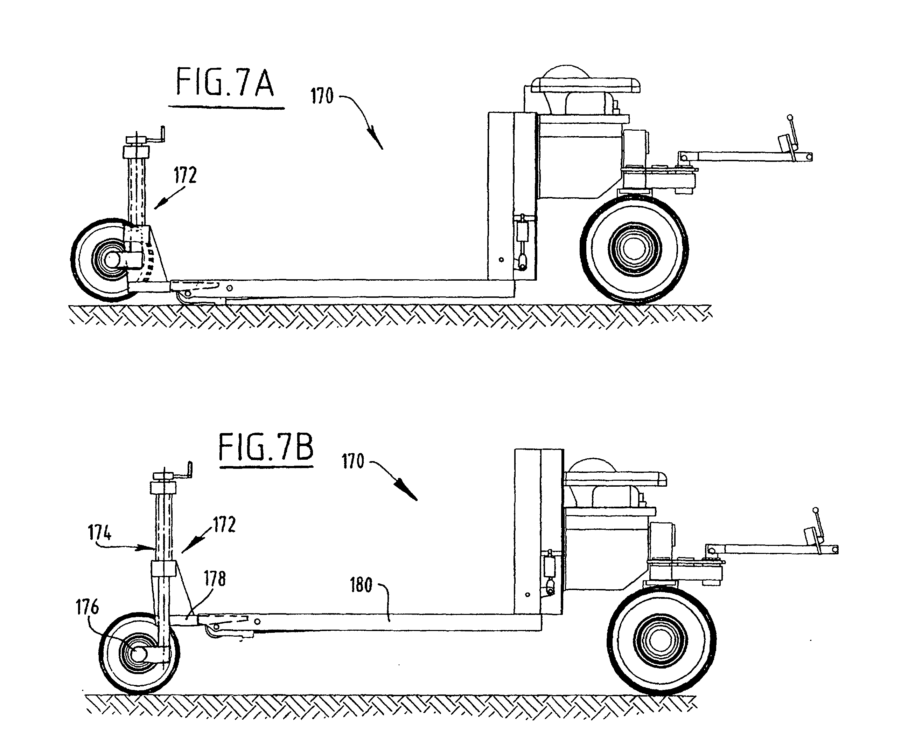

Figures 7a and 7b show a fifth embodiment 170 of the present invention wherein a releasable wheel construction 172 is provided with a hydraulic cylinder rod 174 which is joined to a wheel axle 176. This cylinder 174 is provided with an outstanding pin part 178 which fits in a front end of a fork 180 wherein the wheel assembly 172 is locked onto this fork 180 (see figure 7a). These forks 180 can be subsequently raised (figure 7b) by operating cylinder 174. In a not shown embodiment, the hydraulic adjustment of the wheel construction can be effected by means of a battery drive unit. This embodiment finds particular application as an accessory for utilization by trucks in particular for unloading and loading, i.e. over pavements and the like.

An advantage of this last mentioned embodiment of the wheel assembly according to the present invention, is that this can be simply arranged on pallet forks, which forks are not required to be provided with hingeable frame parts.

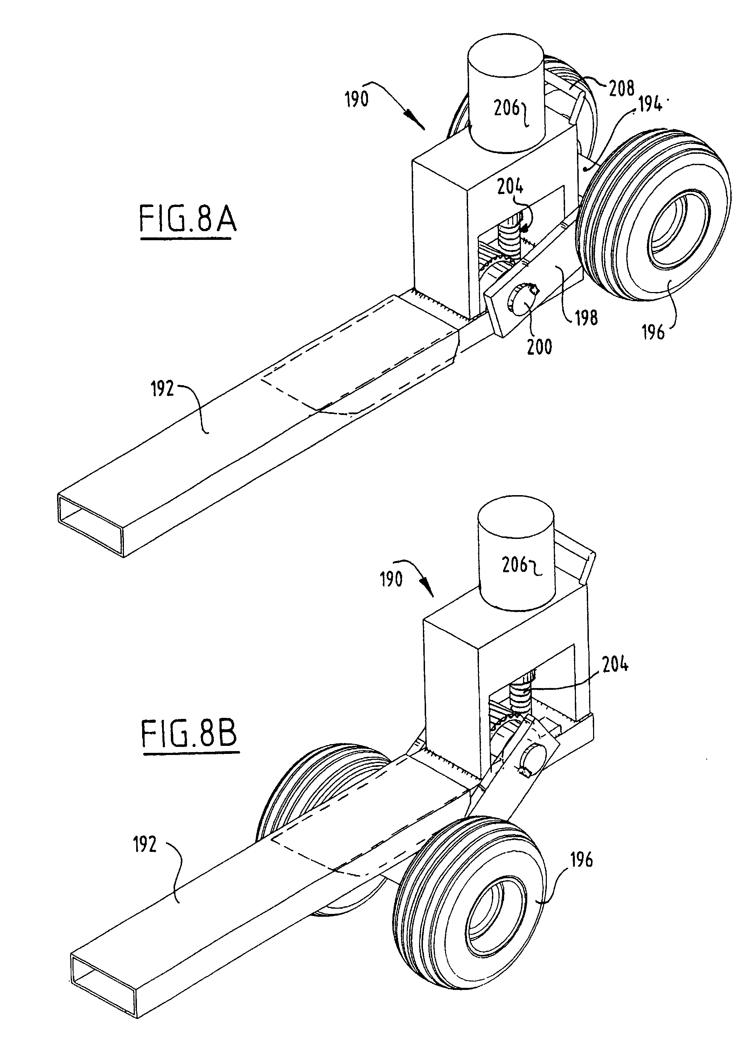

In a further embodiment of a wheel construction according to the present invention (figures 8a, 8b), the wheel construction 190 is displaced under the pallet and fork during the raising thereof, this is order to reduce the size of the wheel base and increase the maneuverability.

With this embodiment, the fork 192 does not need to be provided with rollers at the front end thereof, since the wheel construction 190 enables displacement of the assembly in both a lowered position (figure 8a) and a raised position (figure 8b).

This wheel construction 190 consists of two wheels 196 arranged on an axle 194. Two arms 198 are arranged on the axle 194, which arms 198 are also joined by means of a second axle 200, provided with cogs, which is mounted in a frame 202 of the wheel construction 190.

A fixing rod 204 extends through the frame 202 and is joined with a hand knob 206. A handle 208 is also mounted on the frame 202.

In use, the wheel construction 190 is pushed into the front end 190 of the fork 192 whereafter the wheels 196 are rotated about the axle 200 (see figure 8b), in which position the wheel 196 can be secured by means of the fixing element 204.

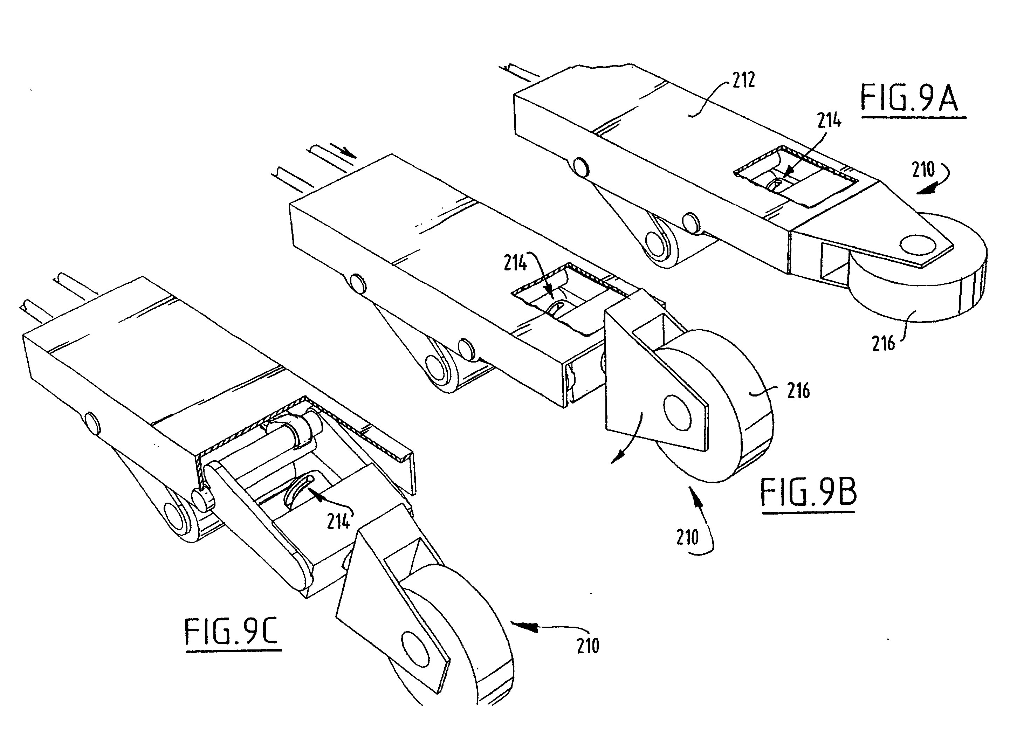

By a seventh embodiment (figure 9) of the present invention a wheel construction is fixedly mounted on a front end of a pallet fork 202 by means of securable, rotatable element 204.

This wheel construction 210 can accordingly be used between a first position (figure 9a), wherein the fork wheel 216 are arranged in line with the fork 212, and a second position (figures 9b and c) wherein the fork wheel 216 is arranged substantially perpendicular to the fork 212, in which position the front wheel 216 supports the fork 212.

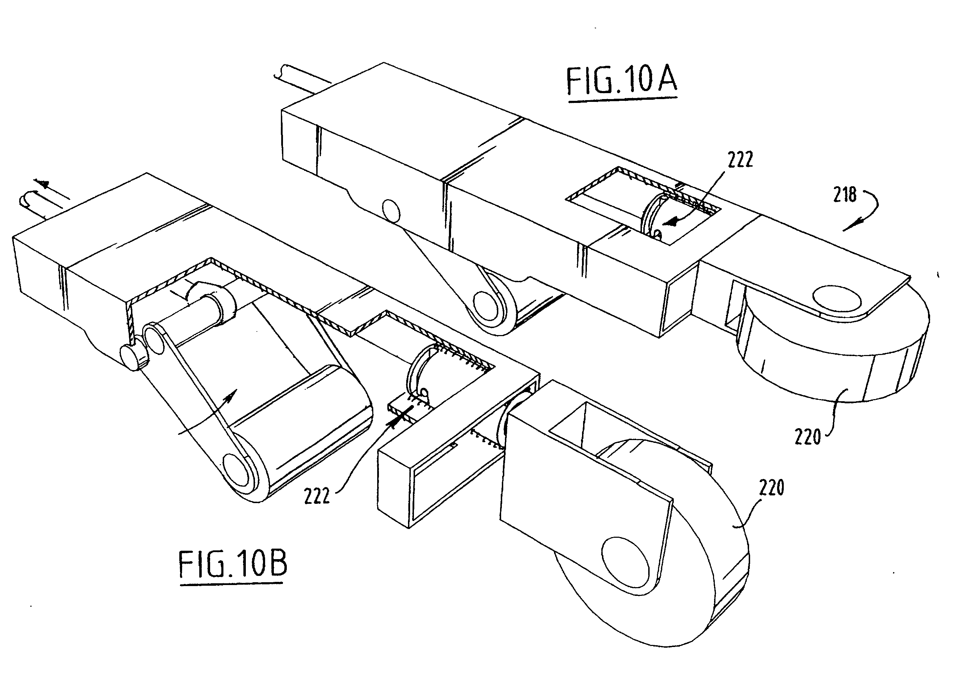

By an eighth embodiment of the wheel construction 218 according to the present invention (figures 10a, b) the fork wheel 220, as in figure 9, is fixedly mounted on a mounting element 222, wherein the mounting 222 is however asymmetrically mounted on the front end of the fork.

Since the point of rotation is asymmetrically arranged in this embodiment, the fork does not need to be pushed into a raised position in order to rotate the fork wheel into its effective position. In this embodiment the fork wheel is rotated into its effective position whereby the fork wheel pushes the fork wheel upwards.

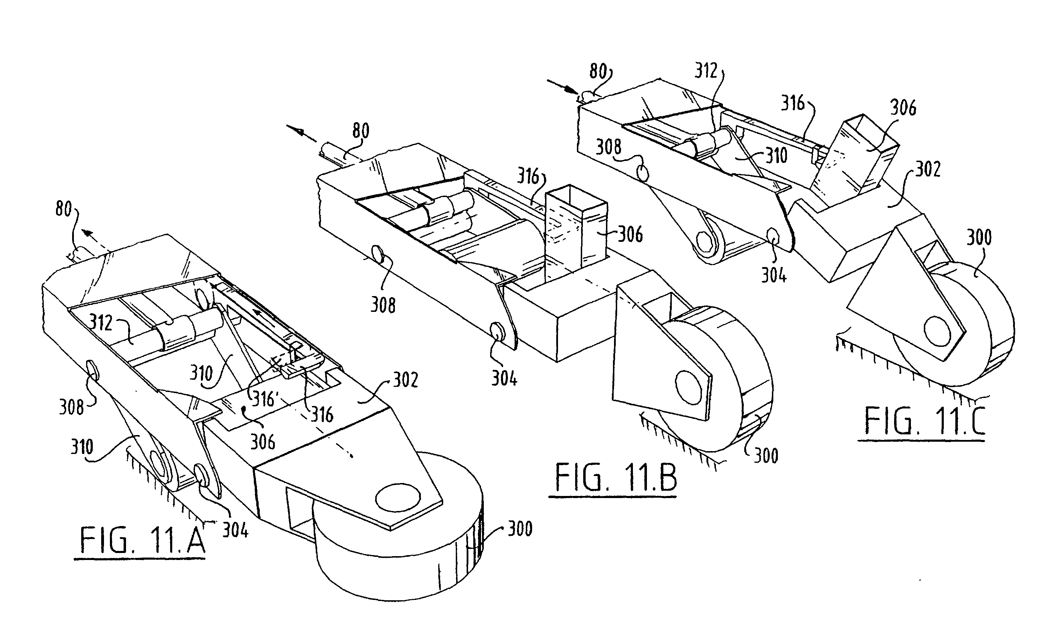

In a ninth embodiment of the present invention, figure 11, the fork wheel 300 is fixedly, rotatably mounted on a hingeable mounting 302, which is in turn connected to the fork by means of a pin 304, where about the mounting part 302 is hingeable.

A rotatable block 306 is arranged behind the mounting part 302.

The roller is connected to the fork by a rotatable, securing pin 308, which extends between the front sides of the fork and the roller wing parts 310. The roller wings 310 are connected to the transmission rod 80 by means of a separate connecting pin 312, extending exclusively between the wings 310, upon which connecting pin 312, an L-shaped pushing element 316 is also mounted.

In use, the transmission rod 80 can be retracted, after the fork wheel 300 has been manually or automatically, not shown, rotated into its use position, fig 11b, whereby the roller is pulled upwards around the securing pin 308, whereby in turn the connecting pin 312 and the L-shaped pushing element 316 are displaced away from the fork wheel 300, figure 11b.

In this position, the block 306 is released from beneath the pushing element 316 and can be either automatically by means not shown, or manually upwardly rotated as in figure 11b. Subsequently the transmission rod 80 can be forwardly displaced, whereby the above referred to steps are reversed, so that the pushing element 316 pushes against this block 306, which in turn pushes against the mounting part 302 in order to further downwardly displace the fork wheel 300 in turn further raising the assembly forks.

This embodiment allows the forks to be pushed through pallet openings whereafter the fork wheels may be automatically arranged in their use positions.

By these embodiments (figures 9, 10, and 11) the fork wheel has a diameter greater than the fork thickness, but the breadth of the wheel is roughly equal to the breadth of the fork. Accordingly the fork wheels can be easily rotated into an effective position whereby they may or may not be further downwardly displaceable (see for example figure 9c).

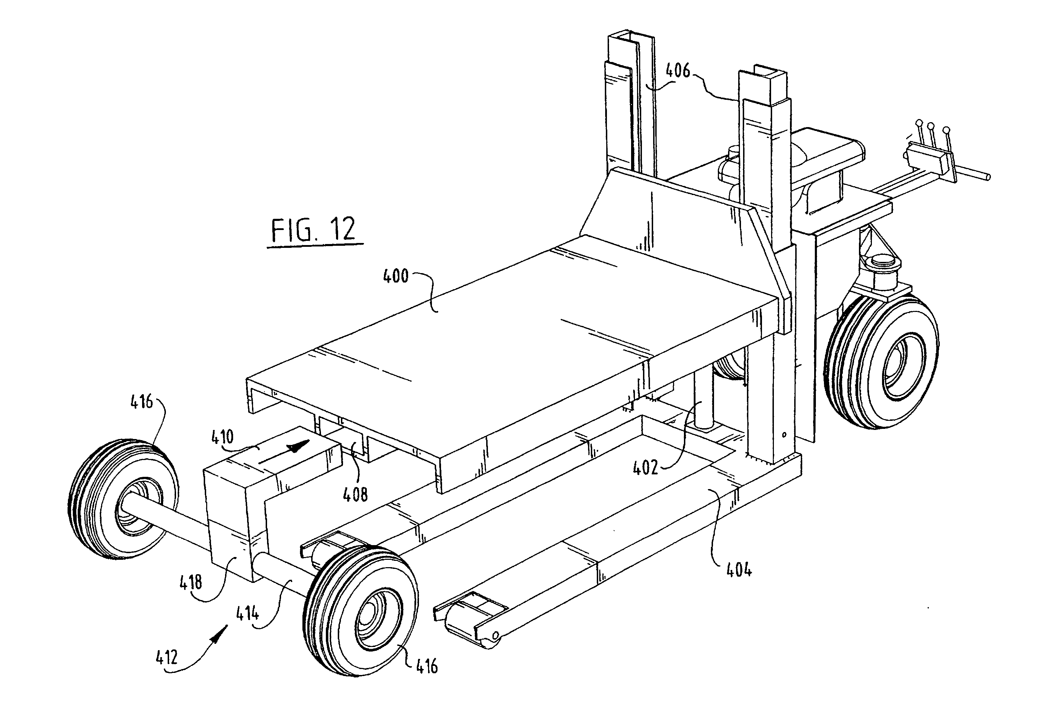

In figure 12, the assembly is furthermore provided with a carrying platform 400, which is also upwardly and downwardly displaceable by means of a cylinder-piston arrangement 402, which extends upwardly from a fork frame part 404 to connect with the platform which is displaceable in the inner upright struts 406.

A female receiving profile 408 is arranged at the front of the platform thereunder to receive a male part 410 of a wheel construction 412, which apart from this male part 410, also consists of an axle 414 upon which two wheels 416 are mounted, and a connecting part 418 extending centrally between the axle and the male part 410. In use the, the platform can rest as it were on the forks whereby the assembly may be used as a normal pallet wagon, or the platform can be raised and the male part 410 of the wheel construction 412 inserted into the female profile 408 of the platform whereafter the assembly is more suited to carrying greater loads over uneven terrain.

In a further not shown embodiment, the platform as shown in the embodiment in figure 12, is replaced by two fork-like supports wherein a wheel construction according to the present invention is arrangeable.

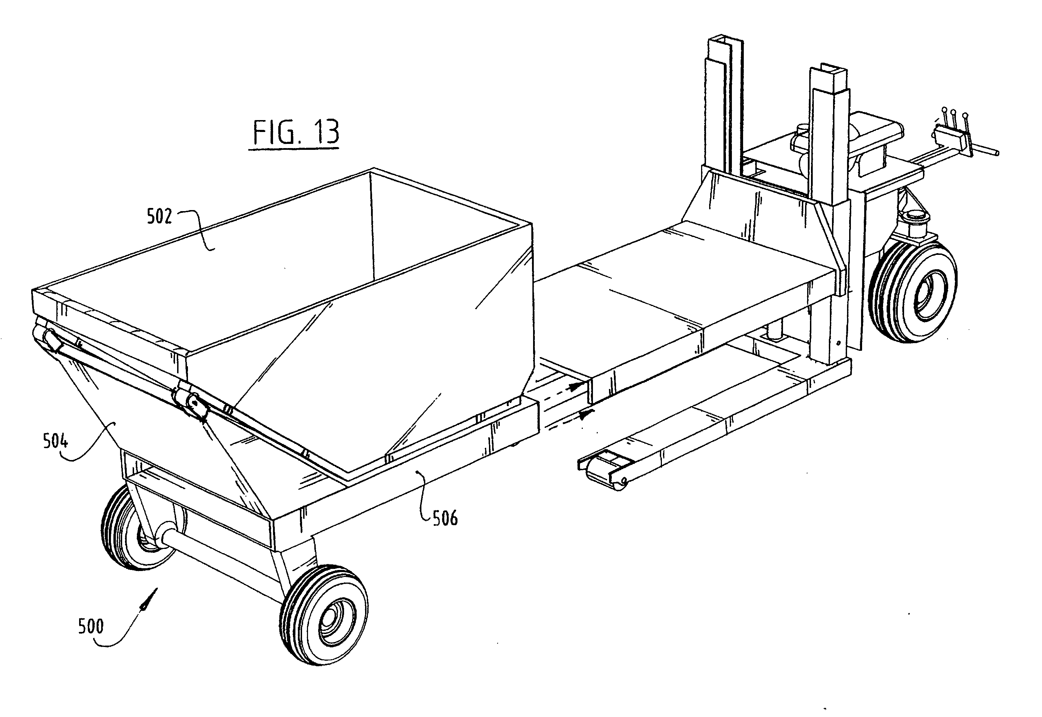

Figure 13 shows a variant on the embodiment as shown in figure 12, where the wheel construction is replaced by a wheelbarrow like assembly 500, having a container 502 hingeably mounted on a mounting block 504, which is in turn mounted on a hollow rectangular base 506 which lockably fits over the platform. In this position the container 502 may be automatically raised and lowered by a cylinder-piston arrangement, not shown.

These embodiments of the present invention enable the platform or upper forks to be firstly loaded when occupying a lowered position, whereby subsequently the platform or upper forks can be raised, the assembly at this point being stabilised by the lower forks on the ground, whereafter the wheel construction can be attached to the platform/upper forks, and the lower forks then raised, in which state the assembly can be easily guided over soft/farmland for example, i.e the lower forks provide a good degree of stability when loading on soft/farmland, whereafter the lower forks are raised in order to provide good transportability and manoevrability under these circumstances.

The invention is not limited to the above description, the requested rights are determined by the following claims.

## Claims

1. Assembly (1) for transporting pallets, containers and the like, said assembly comprising:
- a frame part (2),
- support means (4) which extend forwardly from said frame part for supporting pallets or the like thereon, wherein said support means are displaceable between a loading position and a transporting position, and,
- securing means (24,26), associated with the support means,
- one or more wheels (16) having a diameter greater than the thickness of the support means, which wheel(s) are secured to the support means thereby, wherein said wheels are displaceable, when secured to the support means, between a stowed away, non-use position, and a use position, in which use position the assembly is displaceable via said wheels.

2. Assembly according to claim 1 wherein the wheel securing means comprise a receiving part (28), said receiving part being cooperable with a mounting member (22) associated with a wheel, said wheel having a diameter greater than the thickness of the support means.

3. Assembly according to any of the preceding claims further comprising one or more wheels (16) having a diameter greater than the thickness of the support means, secured thereto.

4. Assembly according to any of the preceding claims wherein the wheel securing means are arranged at a front end (16) of the support means (4).

5. Assembly according to claims 3 or 4, wherein the wheel (16) is releasably securable to the support means (14).

6. Assembly according to claims 3 or 4, wherein the wheel mounting is rotatably arranged on the support means.

7. Assembly according to any of the claims 4-6 wherein the diameter of the wheel is roughly the same as or greater than the upwards and downwards displaceability of the support means.

8. Assembly according to any of the preceding claims wherein the support means comprise two forwardly extending fork elements, and/or a forwardly extending carrying platform (400).

9. Assembly according to claim 8 wherein each fork element is provided with a fixed roller (12) arranged at a front end (16) thereof, said roller having a diameter about the same as the thickness of the fork-like support element.

10. Assembly according to claim 9 wherein the rollers are displaceable, preferably automatically, between a first rolling position wherein the rollers are in line with the forks, and a second position wherein the rollers depend under the forks.

11. Assembly according to any of the claims 8-10, wherein, when provided with the fork elements and the carrying platform, the wheels are secured to the latter.

12. Assembly according to claim 11 wherein a wheelbarrow-like container (502) is mounted on the carrying platform.

13. Assembly according to any of the preceding claims wherein the assembly further comprises steering means for steering the assembly, wherein these steering means (60) are joined with the frame part (2).

14. Assembly according to claim 13, further comprising operating means (70) which are preferably connected to the steering means (68) for operating the automatic displacing means.

15. Assembly according to any of the preceding claims, further comprising automatic displacing means for automatically displacing the support means between a low position and a raised position wherein these automatic displacing means preferably comprise a cylinder-piston (34,402) arrangement connected to the support means.

16. Assembly according to any of the previous claims, further comprising a motor for driving the front and/or rear wheels of the assembly.

17. Assembly according to any of the previous claims, wherein the operating means comprise a steering column associated with the rear wheels.

18. Use of an assembly according to any of the preceding claims for transporting pallets or the like.

19. Wheel construction being coupleably, securable to a load carrier such as a pallet wagon or the like, comprising:
- one or more wheels (16) mounted on an axle (18);
- coupling means (22,26) for coupling the wheel (16) assembly to the load carrier, between a stowed away, non-use position, and a use position, in which use position the load carrier is displaceable via the wheel construction.

20. Wheel construction according to claim 19 further comprising automatic displacing means for automatically displacing the wheel construction, when attached to load carrier, between a coupling position and a transporting position.

## Patentansprüche

1. Vorrichtung (1) zum Transportieren von Paletten, Behältern und dergleichen, welche folgende Teile aufweist:
- einen Rahmenteil (2),
- Trägermittel (4), die sich von dem Rahmenteil nach vom erstrecken, um die Paletten oder dergleichen darauf abzustützen, wobei die Trägermittel zwischen einer Beladungsstellung und einer Transportstellung versetzbar sind, und
- Sicherungsmittel (24, 26), die den Trägermitteln zugeordnet sind,
- ein Rad oder mehrere Räder (16) mit einem Durchmesser, der größer ist als die Dicke der Trägermittel, wobei das Rad bzw. die Räder auf den Trägermitteln dadurch gesichert sind, wobei die Räder, wenn sie auf den Trägermitteln gesichert sind, zwischen einer Nicht-Gebrauchs-Verstaustellung und einer Betriebsstellung versetzbar sind, in welcher Betriebsstellung die Vorrichtung über die Räder versetzbar ist.

2. Vorrichtung nach Anspruch 1, bei der die Radsicherungsmittel einen Aufnahmeteil (28) aufweisen, der mit einem einem Rad zugeordneten Lagerkörper (22) zusammenwirkt, wobei das Rad einen Durchmesser besitzt, der größer ist als die Dicke der Trägermittel.

3. Vorrichtung nach einem der vorhergehenden Ansprüche, welche außerdem ein Rad oder mehrere Räder (16) aufweist, deren Durchmesser größer ist als die Dicke der Trägermittel, die daran befestigt sind.

4. Vorrichtung nach einem der vorhergehenden Ansprüche, bei welcher die Radbefestigungsmittel an einem Vorderende (16) der Trägermittel (4) angeordnet sind.

5. Vorrichtung nach den Ansprüchen 3 oder 4, bei welcher das Rad (16) lösbar mit den Trägermitteln (14) verbunden ist.

6. Vorrichtung nach den Ansprüchen 3 oder 4, bei welcher das Radlager drehbar an den Trägermitteln angeordnet ist.

7. Vorrichtung nach einem der Ansprüche 4 bis 6, bei welchem der Durchmesser des Rades etwa gleich ist oder größer als die Versetzbarkeit der Trägermittel nach oben und unten.

8. Vorrichtung nach einem der vorhergehenden Ansprüche, bei welcher die Trägermittel zwei nach vorn weisende Gabelelemente und/oder eine nach vom weisende Trägerplattform (400) aufweisen.

9. Vorrichtung nach Anspruch 8, bei welcher jedes Gabelelement mit einer festen Rolle (12) an einem Vorderende (16) versehen ist und die Rolle einen Durchmesser aufweist, der etwa gleich ist wie die Dicke des gabelartigen Trägerelementes.

10. Vorrichtung nach Anspruch 9, bei welcher die Rollen vorzugsweise automatisch zwischen einer ersten Rollstellung, in der die Rollen mit den Gabeln in einer Linie liegen und einer zweiten Stellung versetzbar sind, in der die Rollen unter die Gabeln herabhängen.

11. Vorrichtung nach einem der Ansprüche 8 bis 10, bei welcher die Räder, wenn sie mit den Gabelelementen und der Trägerplattform versehen sind, an letzterer befestigt sind.

12. Vorrichtung nach Anspruch 11, bei welcher ein schubkarrenartiger Behälter (502) auf der Trägerplattform montiert ist.

13. Vorrichtung nach einem der vorhergehenden Ansprüche, bei welcher die Vorrichtung außerdem Steuermittel zum Lenken der Vorrichtung aufweist, wobei diese Steuermittel (60) mit dem Rahmenteil (2) verbunden sind.

14. Vorrichtung nach Anspruch 13, welche außerdem Betätigungsmittel (70) aufweist, die vorzugsweise mit den Steuermitteln (68) versehen sind, um die automatischen Versetzungsmittel zu betätigen.

15. Vorrichtung nach einem der vorhergehenden Ansprüche, welche außerdem automatische Versetzungsmittel aufweist, um automatisch die Trägermittel zwischen einer unteren Stellung und einer angehobenen Stellung zu versetzen, wobei diese automatischen Versetzungsmittel vorzugsweise eine Zylinder-Kolben-Anordnung (34, 402) aufweisen, die mit den Trägermitteln verbunden ist.

16. Vorrichtung nach einem der vorhergehenden Ansprüche, welche außerdem einen Motor aufweist, um die Vorder- und/oder Hinterräder der Vorrichtung anzutreiben.

17. Vorrichtung nach einem der vorhergehenden Ansprüche, bei welcher die Betätigungsmittel eine den Hinterrädern zugeordnete Lenksäule aufweisen.

18. Verwendung einer Vorrichtung gemäß einem der vorhergehenden Ansprüche zum Transport von Paletten oder dergleichen.

19. Radkonstruktion, die mit einem Lastträger, beispielsweise einem Palettenwaggon der dergleichen, kuppelbar und festlegbar ist, mit den folgenden Merkmalen:
- ein Rad oder mehrere Räder (16), die auf einer Achse (18) montiert sind;
- Kupplungsmittel (22, 26), um den Radaufbau (16) mit dem Lastträger zwischen einer Verstau- bzw. Ruhestellung und einer Betriebsstellung zu kuppeln, in welcher Betriebsstellung der Lastträger über die Radkonstruktion versetzbar ist.

20. Radkonstruktion nach Anspruch 19, welche außerdem automatische Versetzungsmittel aufweist, um automatisch die Radkonstruktion, wenn sie am Lastträger befestigt ist, zwischen einer Kupplungsstellung und einer Transportstellung zu versetzen.

## Revendications

1. Ensemble (1) servant à transporter des palettes, des conteneurs ou des articles semblables, ledit ensemble comprenant :
- une pièce de bâti (2),
- des moyens de support (4) qui s'étendent de ladite pièce de bâti vers l'avant pour y supporter des palettes ou des articles semblables, dans lequel lesdits moyens de support peuvent être déplacés entre une position de chargement et une position de transport, et,
- des moyens de fixation (24, 26), associés avec les moyens de support,
- une ou plusieurs roues (16) ayant un diamètre plus grand que l'épaisseur des moyens de support, laquelle ou lesquelles roues sont de ce fait fixées aux moyens de support, dans lequel lesdites roues peuvent être déplacées, quand elles sont fixées aux moyens de support, entre une position de stockage et de non-utilisation, et une position d'utilisation, dans laquelle position d'utilisation l'ensemble peut être déplacé via lesdites roues.

2. Ensemble selon la revendication 1, dans lequel les moyens de fixation des roues comprennent une partie réceptacle (28), ladite partie réceptacle pouvant coopérer avec un élément de montage (22) associé à une roue, ladite roue ayant un diamètre plus grand que l'épaisseur des moyens de support.

3. Ensemble selon l'une quelconque des revendications précédentes, comprenant en outre une ou plusieurs roues (16) ayant un diamètre plus grand que l'épaisseur des moyens de support, et fixées à eux.

4. Ensemble selon l'une quelconque des revendications précédentes, dans lequel les moyens de fixation des roues sont agencés à une extrémité avant (16) des moyens de support (4) .

5. Ensemble selon les revendications 3 ou 4, dans lequel la roue (16) peut être fixée de manière détachable aux moyens de support (14).

6. Ensemble selon les revendications 3 ou 4, dans lequel le montage de la roue (16) est agencé de façon à pouvoir tourner sur les moyens de support.

7. Ensemble selon l'une quelconque des revendications 4 à 6, dans lequel le diamètre de la roue est grossièrement le même ou plus grand que les possibilités de déplacement vers le haut et vers le bas des moyens de support.

8. Ensemble selon l'une quelconque des revendications précédentes, dans lequel les moyens de support comprennent deux éléments de fourche s'étendant vers l'avant, et/ou une plateforme portante (400) s'étendant vers l'avant.

9. Ensemble selon la revendication 8, dans lequel chaque élément de fourche est équipé d'un rouleau fixe (12) agencé à une extrémité avant (16) de celui-là, ledit rouleau ayant à peu près le même diamètre que l'épaisseur de l'élément de support en forme de fourche.

10. Ensemble selon la revendication 9, dans lequel les rouleaux peuvent être déplacés, de préférence automatiquement, entre une première position de roulement dans laquelle les rouleaux sont alignés avec les fourches, et une seconde position dans laquelle les rouleaux dépassent sous les fourches.

11. Ensemble selon l'une quelconque des revendications 8 à 10, dans lequel, lorsqu'elles sont équipées des éléments de fourche et de la plateforme portante, les roues sont fixées à cette dernière.

12. Ensemble selon la revendication 11, dans lequel un conteneur en forme de brouette (502) est monté sur la plateforme portante.

13. Ensemble selon l'une quelconque des revendications précédentes, dans lequel l'ensemble comprend en outre des moyens de direction pour diriger l'ensemble, dans lequel ces moyens de direction (60) sont reliés à la pièce de bâti (2).

14. Ensemble selon la revendication 13, comprenant en outre des moyens de fonctionnement (70) qui sont de préférence reliés aux moyens de direction (68) pour faire fonctionner les moyens de déplacement automatiques.

15. Ensemble selon l'une quelconque des revendications précédentes, comprenant en outre des moyens de déplacement automatiques pour déplacer automatiquement les moyens de support entre une position basse et une position relevée, dans lequel ces moyens de déplacement automatiques comprennent de préférence un agencement cylindre-piston (34, 402) relié aux moyens de support.

16. Ensemble selon l'une quelconque des revendications précédentes, comprenant en outre un moteur pour entraîner les roues avant et/ou arrière de l'ensemble.

17. Ensemble selon l'une quelconque des revendications précédentes, dans lequel les moyens de fonctionnement comprennent une colonne de direction associée aux roues arrière.

18. Utilisation d'un ensemble selon l'une quelconque des revendications précédentes, pour transporter des palettes ou des articles semblables.

19. Assemblage de roues pouvant être fixé par couplage à un porteur de charge du genre wagon à palettes ou porteur semblable, comprenant :
- une ou plusieurs roues (16) montées sur un axe (18) ;
- des moyens de couplage (22, 26) pour coupler l'ensemble des roues (16) au porteur de charge, entre une position de stockage et de non-utilisation, et une position d'utilisation, dans laquelle position d'utilisation le porteur de charge peut être déplacé via l'assemblage de roues.

20. Assemblage de roues selon la revendication 19, comprenant en outre des moyens de déplacement automatiques pour déplacer automatiquement l'assemblage de roues, quand elles sont rattachées au porteur de charge, entre une position de couplage et une position de transport.
